# EUROPEAN PATENT APPLICATION

(11) **EP 4 199 459 A1**
(43) Date of publication of application: **21.06.2023**
(21) Application number: 21215355.5
(22) Date of filing: 17.12.2021
(51) Int. Cl.: H04L 43/50, H04L 41/14, H04L 43/0817, H04L 41/142, H04L 41/147, H04L 41/16, H04L 43/0876, H04L 43/0864, H04L 41/0806, H04L 41/0894, H04L 41/12

(54) **TESTING OF AN ON-DEVICE MACHINE LEARNING MODEL**

(71) Applicant: Koninklijke Philips N.V., 5656 AG Eindhoven (NL)
(72) Inventor: WALKER, Nicholas, Eindhoven (NL); BEARD, Timothy, Eindhoven (NL); CRONIE, Harm, Eindhoven (NL); GARCIA MORCHON, Oscar, Eindhoven (NL); DEES, Walter, Eindhoven (NL)
(74) Representative: Philips Intellectual Property & Standards

(57) **Abstract**

The invention proposes systems and methods for testing on-device machine learning models such as network models of a device based on an access to normal input and output channels, wherein a structure of a model is designed through training such that the model produces distinctive outputs to a given set of test inputs only so long as its internal structure remains in a desired state. Models may be rendered susceptible to such testing via model pre-training with training inputs designed to train the model into an appropriate structure and/or to cause the model to produce a distinctive output if later presented with a certain set of test inputs. If the structure of the model remains within allowable limits, the device will produce a predictable output when tested. If not, the device may be enforced to return to a pre-trained model.

## Description

### FIELD OF THE INVENTION

The invention relates to the field of embedded machine learning models (e.g., neural network models) and their testing in connected devices through communication networks, such as - but not limited to -fifth generation (5G) cellular communication systems.

### BACKGROUND OF THE INVENTION

Hardware-level machine learning (ML) implementations are increasingly developed across domains. In imaging processes, examples include an on-chip artificial intelligence (Al) image sensor and various systems for outputting at least partly classified images from integrated imaging and neural network hardware. In networking, a recent example showed a neural network running entirely on a network interface card. Common features of these implementations are that the observed output may be at least to some extent the result of inference rather than raw data. An increasing range of functionalities of relevance to (public) communication networks may be handled by on-device neural network models running on terminal devices, such as user equipment (UE) devices.

"Deep learning" is a name used for neural networks composed of several layers ("stacked neural networks"). The layers are made of nodes. A node is a place where computation happens, loosely patterned on a neuron in the human brain, which fires when it encounters sufficient stimuli. A node combines (e.g., multiplies) input data with a set of coefficients, or weights, that either amplify or dampen that input data, thereby assigning significance to input data with regard to a task the algorithm is trying to learn. These input-weight products are summed and then the sum is passed through a node's so-called activation function, to determine whether and to what extent that signal should progress further through the network to affect the ultimate outcome, say, an act of classification. If the signals pass through, the neuron has been "activated."

Recent developments have focused on algorithmic approaches to resource allocation rather than machine learning based approaches, for instance, for device-to-device (D2D) communication (i.e., sidelink). As an example, 5G New Radio (NR) systems may use both licensed or unlicensed spectrum for D2D communication, where UEs can perform resource allocation independently of a next-generation Node B (gNB) or other network control function. This leads to a requirement of UEs communicating on the sidelink to perform resource allocation functions and to maintain compliance with the related standards.

At a general level, on-device model training (which allows models to adapt to their observed usage context) offers large performance benefits in several domains. A widely deployed application of on-device model training is federated learning, in which devices may collaborate to train part of a large model without compromising privacy by not allowing data samples to leave the device which captured it.

Notwithstanding the large performance gains offered, on-device model training may cause the structure of a deployed neural network to change significantly over time in an unpredictable way, which leads to a (currently unmet) requirement for robust and frictionless model testing.

Moreover, testing and verification of such neural network models by an external observer may be problematic, particularly when the model is embodied as an embedded hardware function or deeply integrated in the hardware functionality or deeply integrated in the lowest layers of the communication stack because only the physical input channel (or an input close to the physical input channel) and normal observed output may be available (as opposed to software-level access to model parameters), and the test should be designed to be 'frictionless', i.e., not requiring user input or significant use of on-device processing, energy or other resources.

Where a neural network model is used by a device to perform networking tasks, which may occur outside of normal (wireless network) coverage area, then without periodic testing standards compliance may be affected. Additionally, where the output of the model is itself used as input (and possibly training data) for another model, then testing of the first model is required to avoid data corruption of the second model, e.g., in federated learning. Such periodic testing may be inconvenient and may waste resources for widely deployed models if it requires the devices to run additional functions dedicated only to self-testing, rather than their normal inference tasks, as their hardware may not be optimized for tests.

### SUMMARY OF THE INVENTION

It is an object of the present invention to provide an effective solution for testing on-device neural network models.

This object is achieved by an apparatus as claimed in claim 1, by a device as claimed in claim 12, by a system as claimed in claim 13, by a method as claimed in claim 15, and by a computer program product.

According to a first aspect, an apparatus for remote testing of an on-device machine learning model (e.g., an on-device neural network model) operated by a device is provided, the apparatus comprising:
a training input generator for designing training input information based on input information derived from known usage of the on-device machine learning model, and based on a type or class of the on-device machine learning model, wherein the training input information is configured to provide an expected output of the device in response to test input information;
a test unit for applying the training input information and the test input information to the device and for obtaining an output information generated by the device in response to the test input information; and
a model evaluator for comparing the obtained output information with the expected output to evaluate the on-device machine learning model.

According to a second aspect, a method of remote testing of an on-device machine learning model (e.g., an on-device neural network model) operated by a device is provided, the method comprising:
designing training input information based on input information derived from known usage of the on-device machine learning model, and based on a type or class of the on-device machine learning model, wherein the training input information is configured to provide an expected output of the device in response to test input information;
applying the training input information and the test input information to the device;
obtaining an output information generated by the device in response to the test input information; and
comparing the obtained output information with the expected output to evaluate the on-device machine learning model.

According to a third aspect, a first device is provided, which comprises an on-device machine learning model operated by the first device, the first device being configured to determine that training of the on-device machine learning model is required in response to reaching at least one of a group of criteria consisting of a new deployment of the first device or the on-device machine learning model, a new use for the on-device machine learning model, a carrier or owner policy requirement, and a predetermined time elapsed since the last training, to signal the requirement for training via a standard communications protocol to a second network device comprising an apparatus according to the first aspect, and to receive test and/or training information from the second device.

According to a fourth aspect, a system is provided, which comprises at least one first device according to the third aspect and at least one second device with an apparatus according to the first aspect.

Finally, according to a fifth aspect, a computer program product is provided, which comprises code means for producing the steps of the method of the second aspect when run on a processor of a device.

Accordingly, the on-device machine learning model (e.g., a neural network model) can be configured to produce an expected output in response to a test input because of prior exposure to the training input data. In other words, the training input information is selected to get the on-device machine learning model into a suitable state for later testing. The on-device machine learning model can thus be tested using only network-side inputs and outputs without requiring software access to the model (regardless of whether the model is embodied in hardware, software, or mixed). Suitable input information and/or parameters can be designed and distributed to act as 'training' and/or 'test' inputs for the on-device model given model usage and communications scenario.

Furthermore, a policy can be deployed to determine which devices require testing, e.g., triggered by certain conditions. An updated model can then be reported by the tested device if an output of the testing system is positive or has at least a given quality level.

Thus, a first entity is enabled to render a neural network model or other machine learning model running on a second entity susceptible to external testing and to provide such external tests, even when the first entity only has access to normal inputs and outputs of the model.

Thereby, model testing can be achieved by accessing normal inputs and outputs only. Moreover, minimal or no calculation or software effort from the device under test is required, since the device under test only needs to perform its normal operation or other functions, thus saving resources on the device under test.

Furthermore, in some embodiments, training data may be designed such that response(s) to a test gives at least some information (e.g., statistical information) about the structure of the whole model, rather than only the specific activation(s) which triggered the observed output. In some embodiments, the output might include information about the internal states of the network instead of just its activation. Therefore, neural network models or other machine learning models that operate on arbitrary data types may be tested by network-side inputs; or testing may be triggered remotely by a system, e.g., by mixing their training data with network-accessible parameters.

It is noted that the device or network device referred to herein may be configured to perform functions other than networking functions. It may be applied in non-networking applications (e.g., camera and projector) or in applications where the test unit is collocated with the device.

According to a first option, the test unit may be configured:
to apply the training input information by transmitting it to the device and to obtain the output information by receiving it by means of a transceiver; or
to apply the training input information by interfacing a hardware sensing unit on the device and to obtain the output information by analyzing an output of the hardware sensing unit on the device.

Thereby, the on-device testing may be controlled by a remote network device or by a collocated connected device.

According to a second option which may be combined with the first option or any of the above first to fifth aspects, a policy may be deployed (e.g., by the apparatus), that is triggered by at least one predetermined condition, to determine devices that require testing. Thereby, it can be ensured that the on-device machine learning model is regularly tested to ensure proper operation of the device.

According to a third option which may be combined with the first or second option or any of the above first to fifth aspects, hardware level inputs may be designed, which trigger certain states of the on-device machine learning model to cause the device to produce an output (e.g., a networking output) as the output information. Thus, the on-device machine learning model can be tested via usual hardware level inputs of the device by merely checking the produced output of the device.

According to a fourth option which can be combined with any of the first to third options or any of the above first to fifth aspects, the test input information may correspond to at least a subset of the training input information, wherein the model evaluation is based on an accuracy of a response of the on-board machine learning model. This provides the advantage that a specific test input information is not required and a deviation or non-compliance of the model during operation can be verified by checking accuracy of the response to at least a subset of the original training input information.

According to a fifth option which can be combined with any of the first to fourth options or any of the above first to fifth aspects, an external input database may be provided for storing the test input information, the training input information and the input information, wherein the input information may be associated to a list of types of the on-device machine learning model, and wherein the test input information may be associated to expected responses of network devices. Thus, the required test input information and expected response of the device under test can be obtained by simply accessing the external input database using the type of tested on-device machine learning model.

According to a sixth option which can be combined with any of the first to fifth options or any of the above first to fifth aspects, wherein the on-device machine learning model may be rendered susceptible to testing by applying a model pre-training using a mixed data vocabulary that contains network-accessible parameters mixed with true training data for an intended function of the on-device machine learning model. Thereby, the testing of the on-device machine learning model can be achieved by checking the intended function at the output of the device under test.

According to a seventh option which can be combined with any of the first to sixth options or any of the above first to fifth aspects, a radio frequency control algorithm may be provided for controlling the on-device machine learning model by using a test transceiver as networking hardware of the test unit and capable of altering at least one transmission characteristic of transmissions of the test transceiver. Thus, the on-device machine learning model can be tested by using networking hardware for altering transmission characteristics.

According to an eighth option which can be combined with any of the first to seventh options or any of the above first to fifth aspects, a test timing algorithm may be provided for determining when the device requires testing, and a status database in which results of model tests and policies regarding actions to be taken for failed tests are stored. Thereby, it can be ensured that the on-device machine learning model is regularly tested and kept in a state of proper operation.

According to a ninth option which can be combined with any of the first to eighth options or any of the above first to fifth aspects, wherein the training of the on-device machine learning model (e.g., by the training input generator) may be configured:
to design modifications to a fraction of known model inputs to cause the existence of one or more backdoor activations in the on-device machine learning model; or
to apply data tagging (e.g., radioactive data tagging) by adding tagged data to a training set to allow for statistical identification of specific training input information; or
to use the input information as the test input information to allow for testing by checking whether same outputs are obtained as during original training within a given range; and/or
to apply federated learning for training the on-device machine learning model.

Thereby, various options for efficient (network-based) testing of the on-device machine learning model can be provided for various applications. As explained later, in context of the present invention, radioactive data tagging is intended to be understood as a process of modifying training inputs with tags such that the presence of the tags causes lasting changes to the internal structure of the trained model (beyond that which would be caused by the untagged data), which can be later discovered by a statistical analysis of model outputs.

According to a tenth option which can be combined with any of the first to ninth options or any of the above first to fifth aspects, the test input information or a command triggering local testing may be distributed (e.g., by the apparatus) in a unicast or multicast or broadcast channel. Thereby, efficient testing of on-device machine learning models on more than one (network) device under test can be achieved via a single communication channel.

According to an eleventh option which can be combined with any of the first to tenth options or any of the above first to fifth aspects, the on-device machine learning model may be distributed to the first device, wherein the test input information comprises information used for creation of the on-device machine learning model and the expected output. Thus, pre-trained machine learning models can be distributed to (network) devices, so that efficient model testing can be achieved without prior training or pre-use phase.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the device of claim 12, the system of claim 13, the method of claim 16, and the computer program product of claim 17 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a system architecture according to various embodiments;
Fig. 2 schematically shows a process flow diagram of a procedure for training and testing an on-device neural network model according to an embodiment;
Fig. 3 schematically shows a flow diagram of a neural network model testing process according to an embodiment;
Fig. 4 schematically shows a flow diagram of a pre-use phase of a model testing procedure according to an embodiment;
Fig. 5 schematically shows a flow diagram of a use phase of a model testing procedure according to an embodiment;
Fig. 6 schematically shows a diagram indicating a training phase according to an embodiment; and
Fig. 7 schematically shows a diagram indicating a use phase according to an embodiment.

### DETAILED DESCRIPTION OF EMBODIMENTS

Embodiments of the present invention are now described based on a cellular communication network environment, such as 5G.

Throughout the present disclosure, the abbreviation "gNB" (5G terminology) or "BS" (base station) is intended to mean access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

Furthermore, the terms "base station" (BS) and "network" may be used as synonyms in this disclosure. This means for example that when it is written that the "network" performs a certain operation it may be performed by a CN function of a cellular network, or by a specific base station that is part of such cellular network, and vice versa. It can also mean that part of the functionality is performed by the cellular network and part of the functionality by the base station.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

Neural networks can be externally controlled by inserting and detecting so-called 'backdoors'. These backdoors generally consist of certain activations within the network which are known to be excited by inputs of a known form, and usually are entered by presenting the network with a small proportion of modified training inputs at training time. Useful features of such techniques are that only a small proportion (e.g., 1%) of all normal training inputs may need to be modified and the network's accuracy on its original task may remain unchanged or nearly unchanged, yet the backdoors can remain externally detectable during inference via the presentation of known inputs that cause characteristic changes to outputs.

As a more specific example, neural network structures can be externally structured by 'radioactive data tagging', which allows for models containing a specific training input to be identified with high statistical certainty. A useful feature of this technique is that it provides information on whether a certain class of training inputs is influencing the network for inference on a given input set. Further details can be found e.g. in Sablayrolles et al.: "Radioactive data: tracing through training*".*

On-device model training such as federated learning provides significant performance gains, particularly for distributed hardware like UEs or gNBs. In federated learning, each hardware unit has a model that might evolve individually. Each individual hardware unit can report its individual model to a management unit that can aggregate the individual models into a new combined model containing the learnings of all involved hardware units and that can be redistributed again to the hardware units. However, an on-device model may diverge unpredictably overtime if allowed to train independently and therefore requires testing.

The following embodiments allow for implementation of a network-based testing system for an on-board neural network model provided in a terminal device (e.g., a UE) of a mobile communication system (e.g., 5G or other cellular or WiFi communication systems), wherein the on-device neural network model (which may be hardware-embedded or inaccessible) can be rendered susceptible to external tests by accessing normal input and output channels only. This can be achieved by designing the model structure through training such that the model produces distinctive outputs to a given set of test inputs as long as its internal structure remains in a desired state.

Neural network models can be rendered susceptible to such testing via model pre-training using a mixed data vocabulary that contains network-accessible parameters mixed with true training data for the model's intended function. The 'training' inputs may be designed to train the model into an appropriate structure and to cause the model to produce a distinctive output (which might, for example, be a specific misclassification) if later presented with a certain set of 'test' inputs.

In some examples, the training inputs might be chosen to produce a result if the model still relies on the original training inputs for inference, while in others, a specific class might be determined in which an inference result matching this class indicates an acceptable level of model stability. This relates to 'radioactive tagging' embodiments where the tagged data is in the training set.

If the model structure remains within allowable limits, the device will produce a predictable output when tested. If not, the network may enforce a return to a pre-trained model (e.g., reset).

The test inputs and training inputs may take the same physical form and may be provided by network-accessible actions, such as a deliberate resource selection in time-frequency space.

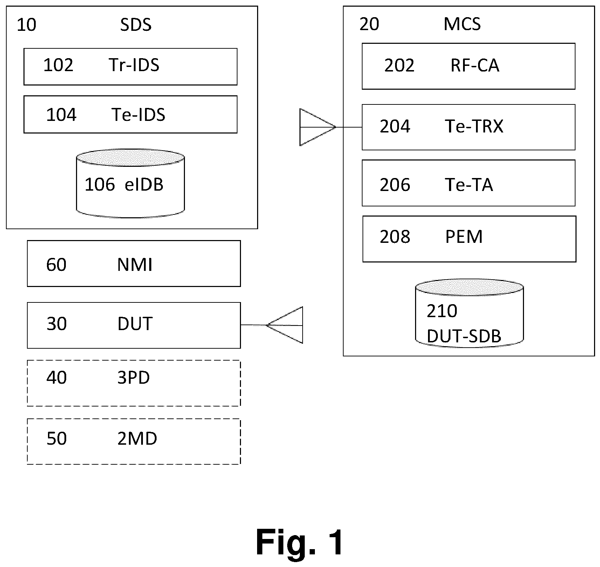

Fig. 1 schematically shows a system architecture according to various embodiments.

The system comprises a device under test (DUT) 30, i.e., a device on which a neural network model (DUT model) runs, which may occasionally require testing, where direct software-side access to the model may be limited in some way, (e.g., by hardware architecture or resource constraints), and may produce networking signals for communication over a public licensed telecommunications network (e.g., a 5G network). Exemplary types of the DUT 30, in various embodiments, may include a UE (such as a smartphone, an Internet of Things (loT) node, a connected camera, a connected microphone, a connected medical device, and the like), networking equipment (such as routers, gateways, relays, and the like), or network infrastructure equipment (such as base stations (e.g., a next-generation Node B (gNB) or another type of access device).

Inputs to the DUT model of the DUT 30 can be provided via hardware of the DUT 30 itself (i.e., hardware level inputs) instead of algorithmically via software or computer code (i.e., software level inputs). The hardware level inputs may therefore be distinct from inputs that may be generated entirely in software so that they can traverse the normal input chain of the DUT 30 (e.g., RF front end -> network interface card -> neural network) to produce a response.

In an example, the DUT model running on a networking device may perform networking tasks such as resource allocation (e.g., provision of certain parameters in the radio frequency (RF) domain including e.g. the selection of a certain frequency channel for a certain time period), which are observed by the DUT 30 via its normal RF hardware.

In another example, the DUT model running on a networking device may perform positioning tasks such as determining the position of the device based on received wireless signals which are observed by the DUT 30 via its normal RF hardware.

In another example, the DUT model running on a connected device may perform image recognition tasks such as determining the presence of a pattern based on captured video images by the DUT 30 via its normal video hardware.

In another example, the DUT model running on a connected medical device may perform recognition tasks aiming at detecting a given medical condition or health related event, e.g., arrythmia or fall, based on physiological vital signs captured by the DUT 30 via means of tailored hardware sensing inputs.

Furthermore, the system comprises a signal design system (SDS) 10 configured to design or create suitable training and/or test inputs which can be applied from one entity in a network (e.g., a gNB) to train and then test neural network models running on another entity (e.g., a UE). The design of the training inputs may depend on the type of embodiment. They could for example be 'radioactive tagged' inputs as described e.g. in Sablayrolles et al.:, "Radioactive data: tracing through training*".*

The signal design system 10 comprises as subcomponent a training input design system (Tr-IDS) 102 for designing hardware-level inputs (training inputs) for model training and state manipulation. The training input design system 102 may itself be embodied as a neural network, which operates on suitable data, e.g., known (normal) model inputs 60, pertaining to the normal functioning of the models under test (e.g., that adhere to predefined criteria/limits and/or produce known outputs of the model) and produces small modifications to that data. An example of a suitable data type for known model inputs 60 may be RF channel characteristics expected to be typical model inputs for a DUT model which performs RF resource allocation tasks.

In an example, a DUT model may recognize a selection of a particular frequency channel by a communication partner during a specific time period as a known model input. It might also refer to the selection of any other communication parameters, such as, e.g., channel decoding (e.g., by using a low density parity check code (LDCP)), massive multiple-input-multiple output (MIMO), non-orthogonal multiple access, resource allocation, or security), as described e.g. in Amanda Ly et al.: "A Review of Deep Learning in 5G Research: Channel Coding, Massive MIMO, Multiple Access, Resource Allocation, and Network Security*".*

The training input design system 102 may operate on the known model inputs 60 directly or in a transformed representation such as a scalogram (i.e., a visual representation of a wavelet transformation having axes for time, scale and coefficient value, analogous to a spectrogram). The training input design system 102 may also include a first feature extraction phase in which some representative features of received inputs are extracted.

The neural network embodying the training input design system 102 may be structured according to machine learning approaches for neural networks, including e.g. 'radioactive' data markers (as described e.g. in Sablayrolles et al.: "Radioactive data: tracing through training*"*) in which small modifications to an entire training set cause certain statistical patterns in the resulting output, or adversarial input generators and 'backdoor' insertion techniques (as described e.g. in Ilia Shumailov et al.: "Towards Certifiable Adversarial Sample Detection*"* or Liao, C et al.: "Backdoor Embedding in Convolutional Neural Network Models via Invisible Perturbation*"*) in which spurious activations are trained into a model using small perturbations on the training set, or federated learning techniques to allow training Inputs to be designed based on locally-stored data (as described e.g. in H. Brendan McMahan et al.: "Communication-Efficient Learning of Deep Networks from Decentralized Data*"* or Yawen Wu et al.: "Enabling On-Device CNN Training by Self-Supervised Instance Filtering and Error Map Pruning*"*).

In alternative embodiments, the training input design system 102 could be embodied as a fixed, non-neural network algorithm or a manual process. In an example, a fixed modification could be included by an algorithm or even manually on every scalogram 'image', causing a predictable drop in classification accuracy for a certain class by hiding a known percentage of the data. This could then be tested externally. A very simple example would be that if e.g. 25% of an image were simply obscured, classification using a known ML technique may drop by some percentage which can be initially measured, and then used as an expected output. The level may be measured and changed across classes by obscuring more or less of the image.

Additionally, the signal design system 10 comprises as subcomponent a test input design system (Te-IDS) 104 for designing hardware level inputs (test inputs) which trigger certain DUT model states to cause the DUT 30 to produce a networking output (DUT response).

It is noted that the functionality of the test input design system 104 may be covered by the training input design system 102 if the test data corresponds to the training data itself and the check is performed on the accuracy of the DUT model or on an expected output for a given training sample. Thus, training inputs can be used as test inputs.

Embodiments of the test input design system 104 can be similar to those of the training input design system, while the test inputs do not need a resemblance to the known expected inputs.

Optionally, a sub-set of the training inputs could be used as test Inputs.

Moreover, the signal design system 10 comprises an external input database (elDB) 106 to which all othercomponents of the system may have access and in which at least one of test inputs, training inputs, known model inputs indexed to a list of DUT model types, and test inputs indexed to expected DUT responses can be stored.

Furthermore, the system of Fig. 1 comprises a model communications system (MCS) 20 for communication of model and/or test inputs and/or training inputs to the DUT 30 or another DUT and for receiving the DUT response and other input from the DUT 30.

The model communication system 20 comprises a radio frequency control algorithm (RF-CA) 202 for controlling the ML system in the DUT 30 by using a test unit 204 (e.g., a test transceiver (Te-TRX) as networking hardware and capable of altering input, e.g., time, frequency, encoding, and/or other characteristics of the test transceiver's transmissions).

Suitable implementations of the test transceiver 204 include standard wireless or wired networking infrastructure or equipment such as a gNB, gateway, router, UE devices, etc.

In alternative embodiments, the DUT 30 may act as a test transceiver for another DUT, in which case the DUT 30 may interface with the RF control algorithm 202 via the data plane. This may require that each DUT has a copy of its test input. When the DUT 30 needs to be tested by another DUT, the DUT 30 sends its testing data to the other DUT requesting testing services. Then, the other DUT sends the testing input of the DUT 30 to the DUT 30 through the data plane of the communication network. Thereby, a distributed operation of the proposed model testing system can be achieved.

Optionally, the match between an expected output and a produced output may be determined by the other DUT by accessing or receiving data stored in the external input database 106.

Additionally, the model communication system 20 comprises a test timing algorithm (Te-TA) 206 for determining when a DUT requires testing, and a DUT status database (DUT-SDB) 210 in which results of DUT tests and policies regarding actions to be taken for failed tests are stored. The policies may, for example, be defined centrally by a networking standard or may be set by a network operator or similar entity. Furthermore, the policies may be deployed in response to a failed test via transmission of a status flag or other indication to the DUT 30 by the network.

Moreover, the model communication system 20 comprises a policy enforcement module (PEM) 208 which enforces policies from the DUT status database 210 when DUTs fail tests. The policy enforcement module 208 may communicate with the DUT 30 via the test transceiver 204 or otherwise over the wider communication network, e.g., the 5G network.

As a further option, the system of Fig. 1 may comprise at least one of a third-party device (3PD) 40 and a secondary neural network model (2MD) 50.

The third-party device 40 may be a terminal device (e.g., a UE such as smartphone) which provides data inputs representing the known model inputs 60 via the network to the signal design system 10. In an example, this may be a UE on the network which communicates to the DUT 30 as part of its normal function. The third-party device 40 may communicate with the network via the model communication system 20 as well as with the DUT 30 by normal network (e.g., 5G) communications.

The secondary neural network model 50 may run on a device such as a gNB or other access device which receives training inputs from the output of the DUT model of the DUT 30. The secondary neural network model 50 may communicate with the network via the model communications system 20.

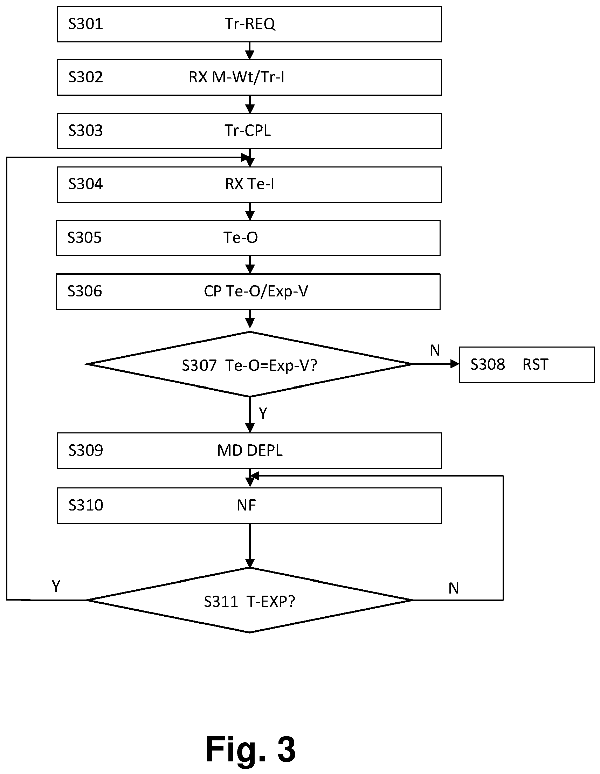

As a further option, the system of Fig. 1 might be such that the DUT 30 and the model communication system 20 might be collocated on a same device. The interface between DUT 30 and the model communication system 20 might not be a networking interface, but a hardware interface so that the model communication system 20 is capable of providing the DUT 30 with suitable hardware-based input, e.g., in the case that the DUT 30 is a connected device such as a camera a microphone or a connected medical device. In this case, the test unit 204 may be configured to apply the training input information by interfacing a hardware sensing unit (e.g., as described in connection with Fig. 3 below) on the connected device and to obtain the output information by analyzing an output of the hardware sensing unit on the connected DUT 30.

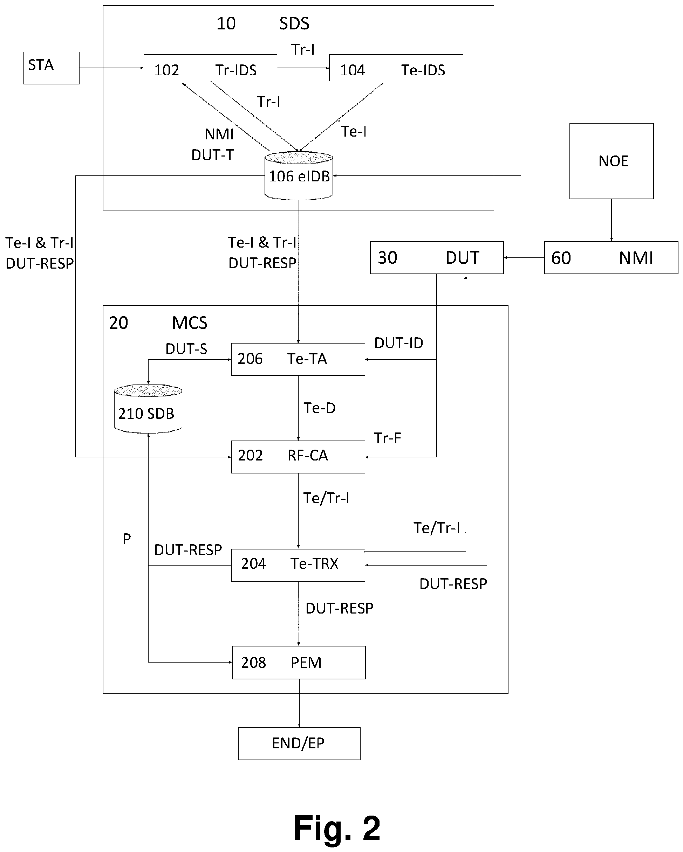

In the following, the interplay between the components of the system of Fig. 1 for testing an on-board model is described with reference to Fig. 2.

Fig. 2 schematically shows a process flow diagram of a procedure for neural network model training and testing according to an embodiment. In Fig. 2, those components/blocks of the architecture of Fig. 1 that are involved in the procedure are indicated but not described again.

The process is designed to enable testing of neural networks e.g. in a scenario in which a testing person or function has limited access to the known inputs and outputs of the DUT 30 (e.g., due to the DUT model's embodiment in hardware, or resource constraints, as discussed previously), in a way which can be implemented over a public telecommunications network (e.g., 5G network) via use of a modified training procedure, where a first entity wishes to train and/or test neural network model(s) running on a second entity.

After an initiation of the procedure (indicated in Fig. 2 by an upper left block "STA"), a pre-use phase is started, where the signal design system 10 is used to design or create test inputs (Te-I) and/or training inputs (Tr-I) for a specific DUT model or type of the DUT 30. To achieve this, the signal design system 10 accesses the known model inputs 60 for the DUT model type (DUT-T) from the external input database 106.

Thus, the training input design system 102 designs training inputs using the known model inputs 60 for the DUT 30, accessed from the external input database 106. The known model inputs 60 have been derived from a normal DUT operating environment (NOE). Several known machine learning techniques, such as radioactive data tags or adversarial input generators, may be suitable for generating modifications to the input signal. Depending on the technique used, the data operated on may be the input signal directly or an image representation of the input signal.

In an example, the training input design system 102 may operate directly on signal data representing the known model inputs 60. An example would be the design of a vector operation applicable to the raw data which causes features extracted from that data to 'move' in a predictable direction within a suitable representation space (as described e.g. in Sablayrolles et al.: "Radioactive data: tracing through training*"*).

Thereby, a model with radioactive data marker is created so that later, when the model is fed with the designed test data, a predetermined model output is delivered as the answer.

Additionally, the test input design system 104 may design test inputs which are matched to the form of training inputs, such that they provide the desired testing function according to the modified training that the DUT model has received.

The training Inputs and matched test inputs are then stored in the external input database 106 indexed to the related type of DUT model, and the system is ready for use.

A subsequent use phase begins when the DUT 30 indicates to the network that it requires training (or a suitable trained model), via the model communication system 20.

More specifically, the DUT 30 may determine that training is required due to reaching one of a number of states, including e.g. at least one of a new deployment of a DUT or DUT model, a new use for an existing DUT model, carrier or owner policy requirements, or a time elapsed since the last training.

The DUT 30 may signal the requirement for training (or a trained model) e.g. via a training required flag (Tr-F) or the like to the network via standard communications protocols, e.g., to the RF control algorithm 202 of the model communication system 20. Furthermore, the DUT 30 may signal a specific DUT identity (DUT-ID) to the test timing algorithm 206.

In response thereto, the network provides training inputs (or a trained model) to the DUT 30 via the test transceiver 204 of the model communication system 20.

The model communication system 20 provides the training inputs by use of the RF control algorithm 202 which reads the required test inputs from the external input database 106 and modifies the test transceiver 204 to provide the required RF characteristics to the DUT 30.

The DUT 30 may signal via the model communication system 20 that it has received the training Inputs.

The network may test the correct receipt and application of the training inputs by transmission of one or more test inputs immediately after training or model deployment. This testing phase can be performed multiple times, triggered by the network or by the DUT 30.

The network provides the test input(s) to the DUT 30 via the test transceiver 204 in the same manner as the training inputs.

In response thereto, a DUT response (DUT-RESP) is received via the action of the DUT 30 (e.g., selection of a certain channel, etc.) which is read by the model communication system 20 e.g. via the test transceiver 204.

The DUT response received is compared with the one expected, given the test input transmitted before, by reference to the external input database 106. Where the DUT response matches the expected response, the DUT 30 is considered ready to use and its status (DUT-S) is logged in the DUT status database 210. Where there is a mismatch, the network provides new training inputs (or a new trained model) to the DUT 30 via the model communication system 20.

The DUT 30 is used as normal, and the DUT model gathers additional known model inputs via its usage in the normal operating environment. At intervals, e.g., when the DUT 30 is within range of the network (e.g., a gNB's cell), or according to a policy (P), the test timing algorithm 206 can be used to determine whether a test is required. The test timing may be decided based on a number of factors in various embodiments (as described later) and/or the test timing may be decided based on the state of multiple DUTs.

E.g., in a large network, it might be more efficient to distribute the testing data or a command triggering local testing in a multicast or broadcast channel. This can be an option to minimize the communication overhead or to accelerate proper operation of all devices.

Where the test timing algorithm determines that a test is required, the network transmits the test inputs as described above. In an event that the test is passed, the DUT status is updated in the DUT status database 210. If the DUT 30 performs a local test, the DUT 30 might only report a message if the test failed or passed, depending on a previously deployed policy. In an event that the test fails, the model communication system 20 retrieves the corresponding policy (P) from the DUT status database 210 and enforces the policy via the policy enforcement module 208 which enforces (EP) the policy on the DUT 30 and/or the procedure ends (END).

Optionally, according to a pre-deployed policy, if and only if a test passes according to certain criteria (e.g., the number of false positives or false negatives when classifying a certain data pattern is not higher than a threshold), the DUT 30 might be required to upload a locally trained model to the system. This reduces communication overhead, e.g., of federated learning where the goal of uploading the locally trained model might include, e.g., improving a global model.

In another embodiment, additional entities may be provided, that enable gathering of known model input data and/or provision of test and/or training inputs from one DUT or another non-directly controlled UE to a second DUT (rather than tests sent directly from the network to the DUT. Thereby, non-network-controlled model testing (e.g., UE-to-UE testing) can be achieved.

In a further embodiment, the test procedure may be modified to support use of a device model output for training of a second model (for example, for a localization use case).

In a further embodiment, in order to make sure that the DUT does not accept training and/ortest inputs and/or policy input and/or request to send its locally trained model from any device, the DUT should verify if the model communication system 20 is authorized (by the network) to perform such tasks. To this end, the DUT may be provisioned with credentials to verify that the input/messages come from a legitimate source, or the DUT may request the network to confirm that the input/messages comes from a legitimate source.

Fig. 3 schematically shows a flow diagram of a neural network model testing process according to an embodiment.

In step S301, a new device is deployed containing a neural network function (in which access to the on-device copy of the model is limited; for example, due to being embodied as dedicated hardware, or resource or other constraints). Alternatively, an existing device may be upgraded to a new model version. The device may then indicate to a network (e.g., a serving access device) its requirement for training and/or receipt of pre-trained model weights, e.g., by sending a training request (Tr-REQ). In another example, the indication by the device of its need for training may be enforced based on public standards or system policy.

Responsive to the indication, the network may provide in step S302 to the device a current set of model weights or, in embodiments, training inputs (RX M-Wt/Tr-I) that are relevant to its intended model usage. These weights or training inputs may, for example, be calculated for a given device or class of devices and stored in a network-side database. Or, in another example, the training inputs or model weights may have been modified prior to transmission such that they are known to induce the presence of certain states in the device once they are received, rendering it susceptible to external tests.

Where model weights (rather than raw training inputs) are broadcast, these weights may themselves have been derived from a training process, using training inputs modified in the same way as raw training inputs.

It is further noted that the training inputs or model weights need not represent all of the training data that the model receives, so long as they cover important functions to a sufficient extent to allow a desired testing function.

In subsequent step S303, the device may indicate to the network that the model weights have been received or that training is complete (Tr-CPL). The latter may be determined algorithmically, e.g., by calculation of a loss function and its progression towards an optimum or stable value.

Subsequently, in step S304, the network or another device or the device itself provides a test input (RX Te-I) to verify that the model has been correctly trained. In an example, the test inputs (i.e., test input data) may be similarly calculated and stored in a network database, as indicated above.

In step S305, the test input causes the device to produce a test output (Te-O), which is measured by the network or another device or the device itself and then compared in step S306 to an expected value derived from a database (CP Te-O/Exp-V).

In step S307, it is checked whether the test output matches the expected value (Te-O=Exp-V?).

Where no response (test output) or a wrong response (test output) is received by the network and no match is determined in step S307, the procedure branches off to step S308 where a reset (RST) of the device may be enforced, e.g., by rolling back the device to the deployed version of the model, or another predefined model setting.

Otherwise, if the test output matches the expected value, the procedure continues with step S309 and the model is now be considered deployed (MD DEPL). The device may store this initial configuration or communicate its structure to the network.

Then, in step S310, device performs its normal function (NF) and the model gathers further data from its usage over time to act as additional training data.

In an intermittent step S311 (which may be triggered e.g. by a timer function or other type of trigger function), the normal function is interrupted at selected times defined by the trigger function, e.g., by the network or by a policy, and the device is re-tested and reevaluated by jumping back to step S304 and repeating steps S304 to S310 when the trigger is activated.

According to an alternative more basic embodiment, the neural network model may be distributed to the devices. In this way, the model does not need to be trained in the devices. In this case, the signaled input might include some data used when creating the model (the training data) and the expected output. Then, at times selected, e.g., by the network or policy, the device re-tests itself by checking that the test output of the distributed neural network model for given test inputs fit the expected output within expected boundaries.

This approach of the above basic embodiment could be initially used and then enhanced with additional steps in which e.g. the devices are provided with training material so that they create the model themselves (fitting the current description). The network may unicast or multicast or broadcasts training data and expected output, to test the locally trained models. Alternatively, in machine learning methods such as federated learning (cf. e.g. Section 7 in 3GPP specification TR 22.874), the local models may be uploaded to the system to be combined. An additional step that can be included is the distribution of a policy stating that the locally trained model is only to be uploaded if the testing phase achieves a minimum performance level.

Thereby, the proposed system can render on-device models susceptible to external testing (e.g., testing by a second entity which may be the network) or self-testing.

For instance, in a context of network security and a device performing some network monitoring, it may only be required that a second device produces a message sequence that triggers a given response by the DUT. However, for other applications, this might be less simple, e.g., for applications using, e.g., a camera. Here, a projector may be used so that the camera can record images generated by the projector. For such applications and devices, e.g., a camera, the device might include additional sensing hardware (e.g., a hardware sensing unit) to mimic a signal that is otherwise generated by the camera sensor (e.g., a CMOS sensor). For instance, a deep learning accelerator can be used as a hardware acceleration for the computation of deep convolutional neuronal networks, e.g. in embedded systems. The deep learning accelerator may be adapted to calculate an inference/prediction for every layer of a deep neuronal network. Within a single layer, input data can be computed in parallel by multiple compute units. It only requires a model (e.g., a deep neuronal network architecture, parameter, scheduling) binarized by a deep learning optimizer as well as an input image provided by a camera sensor. In such a deep learning accelerator, the neural network can be deeply embedded in the hardware and could evolve locally based on the data processed. To test the state of the neural network, it may be required to include testing hardware in the deep learning accelerator that is capable of obtaining a testing signal and creating an input similar to the one that the camera sensor provides. For instance, if a camera sensor contains NxM sensor units and each of them has a given output, e.g., a given voltage between 0 and Vmax, the testing hardware should take a testing signal, e.g., an image of N'xM' pixels, and convert it into a NxM input voltages corresponding to each of the NxM sensors of the camera sensor. For instance, if a pixel in the testing image can have any grey tone g that can take any value between white (1) and back (0), then a given value g for a given pixel can be mapped to a voltage value g^{∗}Vmax for a number N/N' x M/M' of sensor units.

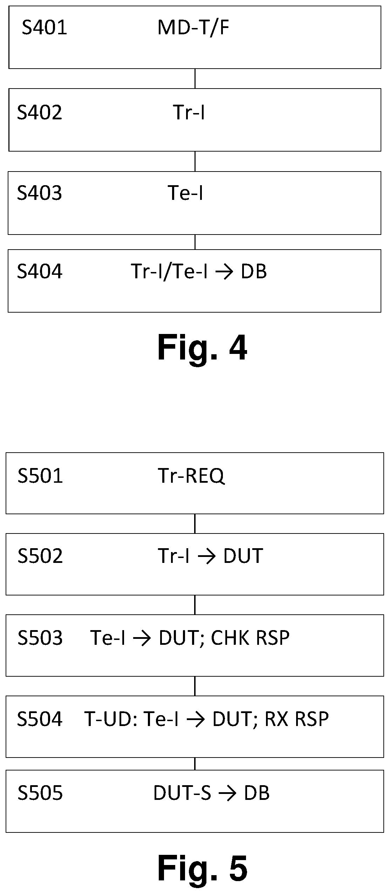

In the following, more detailed embodiments of the pre-use and use phases described above in connection with Fig. 2 are explained with reference to Figs. 4 and 5, respectively, and based on specific examples.

Fig. 4 schematically shows a flow diagram of a pre-use phase of a model testing procedure according to an embodiment.

As already mentioned above, in the pre-use phase, the signal design system is used to design test inputs and/or training Inputs for a specific DUT model or DUT type.

To achieve this, model type and form of known model inputs are accessed from a database in step S401 (MD-T/F).

More specifically, the signal design system may access known model inputs for the DUT model type from the external input database.

Then, in step S402, the training input design system of the signal design system may design training inputs (Tr-I) using the known model inputs for the DUT, accessed from the external input database, e.g., via small modifications to the known model inputs which cause predictable changes to the structure. Several known machine learning techniques, such as radioactive data tags or adversarial input generators, may be suitable for generating modifications to the signal data. Depending on the technique used, the data operated on may be the signal directly, or an image representation of the signal.

In an example, the training input design system may operate directly on the signal data representing the known model inputs. An example would be the design of a vector operation applicable to the raw data which causes features extracted from that data to 'move' in a predictable direction within a suitable representation space (as described e.g. in Sablayrolles et al.: "Radioactive data: tracing through training*"*). In this case the data flow could be signal -> features -> watermark generation -> modified features -> modified signal.

Optionally, in some cases it may be advantageous to operate on image data rather than on the signal data itself, e.g., a time-series of RF signal data or image data or medical data. This may be the case, for example, where a watermarking technique is used which relies on extensive image transforms. In this case, the known model inputs may be transferred by the signal design system to an image form (e.g., as a scalogram), so that the data flow may be signal -> image representation of signal -> features from image -> watermark generation -> watermarked image -> modified signal (extracted by reversing the image generation step).

In an embodiment, the training inputs may be designed by use of a 'radioactive' data marker approach, as previously described, which operates by creating small modifications to some of the features representing the known model inputs. In this case, the training inputs would resemble the known model inputs with suitable small modifications which cause a predictable, statistical variation in the loss function to be assigned by the DUT model to a certain class of test inputs, such that when presented with a number of test inputs within this class, the DUT model's output statistics provide information about the use of these training inputs for inference. The test inputs may in this case be very similar to the known model inputs used for normal operation.

Thus, the idea is to create a model with radioactive data marker so that later, when the model is fed with the test data, a predetermined answer is delivered.

In the specific case of a radioactive approach, a failed test would lead to a change in the output statistics of the model after several tests. This reveals that the original, network-supplied training data is no longer being used or not mainly being used for inference. The precise thresholds would be application-dependent and would depend also on e.g. what proportion of the training set is radioactively 'tagged'.

An advantage of this approach is that the DUT response will provide information about the entire DUT model. For example, where there are multiple classes, it is possible to 'tag' instances of all classes at training time and test whether the model still uses the training data for all classes using one series of tests. This may be based on the assumption that if the model still uses the prescribed training data, then the output will remain correct. This may be suitable for DUT types to which test access is less time- or resource-constrained, for example a smartphone which is frequently within range of an access device (e.g., a gNB).

In a further embodiment, the training inputs may be designed by use of a 'backdoor' insertion technique (e.g., that of Liao, C et al.: "Backdoor Embedding in Convolutional Neural Network Models via Invisible Perturbation*"* or related literature) to design subtle modifications to a small fraction of known model inputs to cause the existence of one or more backdoor activation in the DUT model. In this case, the training inputs would resemble the known model inputs with suitable small modifications to cause a high classification probability to be assigned by the network to certain matched test inputs (which constitutes the backdoor).

The matched test inputs may be designed to be unlikely or impossible to be observed in normal DUT model usage. For example, the test inputs could include a setting of RF parameters by the tester, which are reserved in the standards for this purpose and therefore will not be seen by the DUT otherwise, so that the DUT is never confronted with the test inputs during normal use. For instance, the test inputs could indicate vital signs that are infeasible in a healthy person, e.g., a heart rate of 400. Thereby, only one test input is required to be displayed during test time, which may be more suitable for DUT models to which test access is more limited. For example, where the DUT is an loT node which is constrained in its resources.

In a further embodiment, the training Inputs may be designed by gross modifications to the known model inputs to train a specific 'class' which is recognized by the DUT model as an input, to which it responds with a predictable output. This approach may be suitable where low complexity is required for the training Input design system since, in this case, there is no need to calculate the appropriate subtle modifications needed in the above other embodiments.

In each of the above embodiments, the test input design system designs in step S403 test inputs (Te-I) which are matched to the form of training inputs, such that they provide the desired testing function according to the modified training that the DUT model has received.

In examples, the test Inputs may be matched to the form of an expected DUT model state after having been trained on the training Inputs or the test inputs may consist of instances of the spurious 'class' which the DUT model has been trained to recognize.

In a further embodiment, the training and test inputs may be designed by using the known model inputs. The test may then be performed by checking that the output of the model provides the same outputs as during the original training within a given range. If the range deviates by more than a threshold, then the model that has been updated based on local training may be judged invalid. In an example, the expected output might refer to an estimated channel quality indicator (CQI) value or a classification of a given networking pattern.

In a final step S404 (Tr-I/Te-I -> DB), the obtained training inputs and matched test inputs are stored in the external input database indexed to the DUT model type and the system is ready for use.

In the following, examples of implementations for at least some of the above embodiments are described.

If a model classifies three types of RF environment (which could be for example indoor, outdoor line-of-sight (LOS), outdoor non-line-of-sight (NLOS)), its known model inputs may be RF data such as signal strength, fading, etc. This data may be represented as many scalograms corresponding to true examples of observed conditions, labelled as such (the known model inputs), and used for model training (which may be either provided direct from the network to the DUT, or used to train a network-side model and then the weights may be transferred to the DUT).

This training can be modified to insert vulnerabilities which are then tested by appropriate test inputs.

As a first option, examples of all the above classes may be 'radioactive' tagged at training time and may form the training inputs that affect the DUT model's classification statistics in small but observable ways. A later test may then simply involve presenting untagged known model inputs (which in this case serve as test inputs) and observing the output statistics. Thereby, with one series of tests, multiple classes across the whole model can be probed at the cost of either having to provide more test inputs or providing some way of observing normal output over time to build the statistics.

As a second option, an 'in-door' backdoor, an 'outdoor LOS' backdoor and an 'outdoor NLOS' backdoor may be built for the above types of RF environments. This can be done by providing more heavily modified training Inputs, while the test inputs may be distinct and can be designed so that they are not used in normal use (e.g., reserved in the communication standard, e.g., 5G, specifications, and involving infeasible conditions such as a UE speed of 600 Km/h when a UE is carried by a person on foot or a heart rate of 400). At test time, the backdoor may cause the DUT model to produce highly unusual output, if it is still present. However, a correct response to the indoor backdoor test does not necessarily reveal information about the status of the outdoor LOS or outdoor NLOS classifiers. An advantage is that if there are only a few classes (e.g., three classes), then only a corresponding number of tests is required.

As a third option, a brute force tactic may be applied by training an additional class (e.g., 'space-borne communications') that does not exist in the normal usage environment. Then, at test time, it can be checked that the model still recognizes 'space-borne communications'. What is learned from such a test is that not too much external training has happened, since if it had, the 'space-borne communications' class would be likely to be forgotten since it has never been observed. The precise threshold for what constitutes too much external training will be highly specific to the implementation.

Fig. 5 schematically shows a flow diagram of a use phase of a model testing procedure according to an embodiment.

The use phase begins when the DUT indicates in step S501 (Tr-REQ) to the network that it requires training (or a suitable trained model), e.g., via the model communication system. The DUT may determine that training is required due to reaching at least one of a number of states, such as new deployment of a DUT or DUT model, new uses for existing DUT models, carrier or owner policy requirements, time elapsed since last training. In an example, the DUT may signal the requirement for training (or a trained model) to the network via standard communications protocols. The network might also get such indication based on a policy or by inspecting the behavior of the potential DUTs.

In another example, the DUT or the model communication system detects that the location of the DUT has changed beyond certain policy criteria (e.g. has moved to far away from a certain position or distance from a gNB or other UE), which may trigger the DUT or the model communication system to signal a request to be tested or trained again. Other policy criteria that may trigger that the DUT requires training may include for example number of connection failures, signal quality/signal strength criteria, battery level, amount of time being out-of-coverage, establishing of a roaming connection to a visiting public land mobile network (PLMN) (rather than being connected to the device's home PLMN), establishing a connection to a different gNB or UE. Also, other criteria may trigger a request for the DUT to be trained again, such as if a the DUT has been subject to a cybersecurity related attack (e.g. Denial-of-service attack, intrusion attack), or starts to show abnormal transmission activity (e.g. start to send messages to the network much more often). In case the DUT is a user equipment (UE) connected to a 5G network, such behavior and also deviations from the policies may be detected by the Network Data Analytics Function (NWDAF), which may send a message to the model communication system to trigger one or more DUTs to be tested or trained again. Additional triggers to re-test/re-train the DUT may come from the Network Exposure Function through which an authorized third party can control/adapt the behaviour of a set of UEs.

In response to the above indication, the network provides training inputs (or a trained model) to the DUT e.g. via the model communication system in step S502 (Tr-I -> DUT).

The training inputs which have been modified by the signal design system may be provided simultaneously with additional known model inputs (e.g., in order to train the DUT model as normal) or may be provided in advance with the balance of training being carried out independently by the DUT.

In an example, the model communication system may provide the training inputs by use of the RF control algorithm which reads the required test inputs from the external input database and modifies the test transceiver to provide the required RF characteristics to the DUT. The DUT may then signal via the model communication system that it has received the training inputs.

In step S503, initial test inputs may be transmitted to the DUT and the DUT response may be checked against an expected value to confirm successful training (Te-I -> DUT; CHK RSP). Thus, the network may test the correct receipt and application of the training inputs by transmission of one or more test inputs immediately after training or model deployment. This testing phase can be performed multiple times, triggered by the network or by the DUTs.

In an embodiment, the network may provide the test input(s) to the DUT e.g. via the test transceiver, e.g., in the same manner as the training inputs. Then, the DUT response is received or otherwise detected via the action of the DUT (e.g., selection of a certain channel, etc.) which can be read by the model communication system. The received or otherwise detected DUT response can be compared with an expected one that relates to the transmitted test input by reference to the external input database.

Where the DUT response matches the expected response, the DUT is considered ready to use and its status is logged in the DUT status database. Where there is a mismatch, the test and/or training may be repeated.

In another embodiment, the network may provide the test input(s) to the DUT together with an expected output. Then, the DUT response may be evaluated locally and compared with the expected output. If there is a mismatch or the output deviates more than a threshold value according to the deployed policy, the DUT may be required to revert to a previous version of the model. This decision can be taken by the DUT itself or after interaction with the system.

Thereafter, the DUT is used as normal while the DUT model gathers additional known model inputs during its usage. At intervals in step S504, e.g., when the DUT is within range of the network (e.g., a gNB's cell) or according to a policy, the test timing algorithm may be used to determine whether a test update is required (T-UD: Te-I -> DUT; RX RSP).

The test timing may be decided based on a number of factors in various embodiments.

In an example, the DUT may be an loT node e.g. with a need to minimize signaling and compute power usage at the node, so that it is advantageous to have a test which operates while only using the 'ordinary' RF functioning of the device. In this case, the neural network model is not used for RF communication tasks. It may simply be provided with networking-relevant RF parameters to allow for this remote and low resource consumption testing mode.

In another example, an loT node may be configured to re-purpose its RF hardware (usually used for communications) to serve a sensing function which could include, for example, an occupancy detection within a room. The occupancy detection process may be subject to a neural network, operating on RF parameters. By training the neural network to respond to test inputs within a range accessible to the communications network, the 'occupancy' model may be tested remotely. The loT model may be updated externally even if on-device training is not used but still require remote testing as a service. Therefore, the test can appropriately be designed and the timing can be set such that the loT node only gets tested after long periods.

In a further example, the DUT may be a UE such as a smartphone which sometimes communicates via sidelink communication, e.g., to relay UEs or other peer devices, and sometimes via ordinary uplink/downlink communication. During a sidelink communication, the UE may be actively performing channel selection, scheduling, etc. using its neural network model, but during other times, it will be under network (e.g., gNB) control. In this case, each 'session' on the sidelink will likely be used by the DUT model to gather additional training data. Therefore, the network may test the UE each time it is in range, and/or a relay UE may be requested to perform the model test (in this case, the relay UE may also optionally be used for training). This test can determine if additional training has happened in an intervening sidelink session. This allows the network to ensure that standards compliance will be maintained by the UE when communicating on the sidelink.

In a further example, the DUT may be a UE which has a neural network or other ML model for positioning. In this case, the known model inputs may be received signal strength (RSS) samples or other signal quality samples of a few anchor devices and the expected output may be the position of the UE. The model training may be refined locally on the UE by using input of other positioning methods, e.g., a global navigation satellite system (GNSS). The testing may then consist of a set of RSS samples and expected model output (i.e., the UE position), which could be provided by e.g. a gNB which 'impersonates' the anchor nodes. In this case, the test timing could be decided opportunistically, e.g., when the UE is in a suitable relationship to the gNB that it can accurately provide the required RSS values.

The test timing may be decided based on the state of multiple DUTs. In a large network, it might be more efficient to distribute the testing data or a command triggering local testing in a multicast or broadcast channel. This can be a suitable option to minimize the communication overhead or to reduce the delay until proper operation of all devices.

Where the test timing algorithm in step S504 determines that a test is required, the network transmits the test inputs by repeating step S503.

If the test was successfully passed, the DUT status is updated in the DUT status database in step S505 (DUT-S -> DB).

If the DUT performs a local test, the DUT might only report a message if the test, e.g., failed or passed, e.g., depending on a previously deployed policy. In the event of a failed test, the model communication system may retrieve a corresponding policy from the DUT status database and may enforce the retrieved policy via the policy enforcement module.

An example of such a policy may be to enforce the DUT model to roll back to an earlier version of the model. This can be enforced via conventional signaling procedures which may be defined in public standards.

Optionally, according to a pre-deployed policy, if and only if a test is passed according to certain criteria, e.g., that the number of false positives or false negatives when classifying a certain data pattern is not higher than a threshold value, the DUTs might be required to upload the locally trained model to the system. This reduces communication overhead, e.g., of federated learning where the goal of uploading the locally trained model might include, e.g., improving a global model.

Optionally, according to a pre-deployed policy, if and only if a test does not pass according to certain criteria, e.g., that the number of false positives or false negatives when classifying a certain data pattern is higher than a threshold value, the DUTs might be required to upload the locally trained model to the system and optionally recorded data that led to the updated model. Such an updated model might indicate that the DUT has been exposed to data and events unknown, e.g., the managing entity in a system relying on federated learning. This reduces communication overhead, e.g., of federated learning where the goal of uploading the locally trained model might include, e.g., improving a global model.

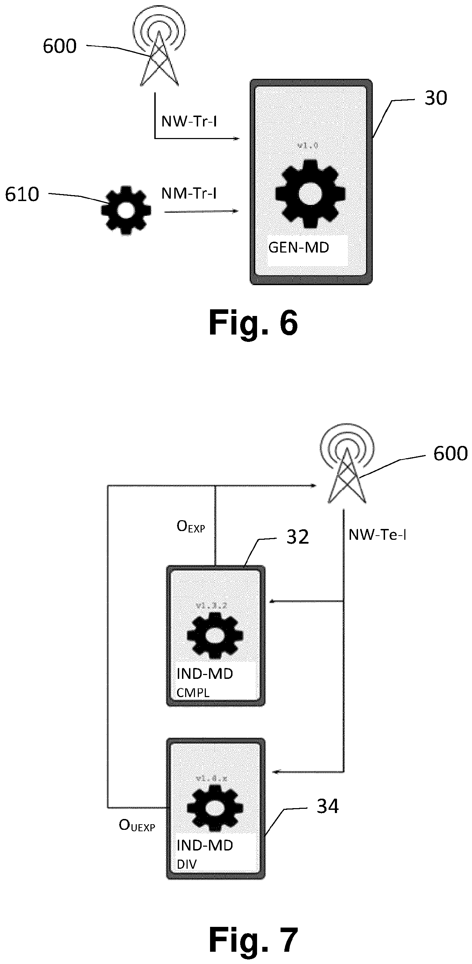

Fig. 6 schematically shows a diagram indicating a training phase according to an embodiment.

During the training phase, a generic neural network model (GEN-MD, e.g., version v1.0) is provided on a UE 30 and receives normally required training data (NM-Tr-I) during normal use from an internal or local model training system 610. Additionally, network-based training inputs (NW-Tr-I) are supplied from a network 600 (e.g., a gNB) to prepare the model for later testing.

Fig. 7 schematically shows a diagram indicating a use phase according to an embodiment.

In the architecture of Fig. 7, first and second UEs 32, 34 with respective individualized neural network models (IND-MD) are tested by the network 600 via a forwarded network-based test input (NW-Te-I).

The individualized neural network model of the first UE 32 of version v1.3.2 is a compliant model (CMPL) and thus delivers an expected output (O_{EXP}) in response to the received test input.

By contrast, the individualized neural network model of the second UE 34 of version v1.4.x is a non-compliant diverged model (DIV) and thus delivers an unexpected output (O_{UEXP}) in response to the received test input.

Thus, the network can be made aware that the model of the second UE 34 has diverged and requires new training or a reset or it might have diverged due to the exposure to data unknown to the network so far.

In a further embodiment, input data may be gathered from additional entities (third-party device). The main procedure of Fig. 3 is slightly modified to enable provision of known model inputs, training inputs and test inputs by a third-party device (rather than directly from the tester (e.g., network) to the DUT. This embodiment may be relevant for a use case of core network testing of gNB's models, based on signal quality inputs (such as CQI) provided from UEs within the gNB's cell. In this use case, the UEs may provide both the known expected inputs and the train and test inputs to the gNB via modifications of their reported values.

To achieve this, the signal design system may query the third-party device to provide known expected inputs, which are stored in the external input database. The training and test input design systems then design training and test inputs which may be partly or wholly based on modification of values provided by the third-party device to the DUT. In a specific example, the train and test inputs may even be equal to the known inputs.

During the use phase, the training and/or test inputs may be delivered to the DUT by setting of the designed states at one or more third-party devices. The core network may communicate directly with the third-party devices via a predefined logical channel for this purpose.

The third-party devices may then set the appropriate parameters as requested by the network to provide the train and test inputs.

The DUT response (and therefore result of the test) may be observed by the network either directly by signaling from the DUT, or via a report provided by one or several third-party devices signifying the actions taken by the DUT during the testing.

In particular, in a specific embodiment, the system may query the DUT to perform a test. The DUT, which has locally updated its model based on input received from the third-party device, may perform the test with testing data that might have been received. The DUT will verify whether the model output falls within the boundaries of the expected output according to the corresponding policy.

In a further embodiment, a certified output of a first model may be used as a second model's test input. In an example, a UE may have a neural network model for positioning. For instance, given RSS samples of a few anchor devices, the model outputs the position of the UE. The model is trained further locally by using input of other positioning methods.

Now, the testing may consist of a set of RSS samples and expected model output (the UE position). Thus, the data storage can be modified to allow external devices to access the data in the DUT status database, such that the DUT's normal output may itself be used as input to another model only so long as the DUT model remains certified in the DUT status database.

This embodiment is expected to be relevant to a use case of location-based services. For example, the output of a UE's location-estimation model (which may be dependent on network parameters, and/or other inputs) may be used to train a local model stored on a gNB, that associates parameters such as RSS values reported by the UE to the UE's location. The advantage of this case is that only certified data is enabled to be used by the second model for training. Optionally, the inputs may also be checked by cross-comparison with data reported by other devices.

Thus, in addition to pass/fail results, the model communications system now also stores model output values (e.g., location) in the DUT status database, and optionally a flag indicating that these values have been cross-checked against other device's reports of the same data, which could be measured e.g. via a GNSS or round-trip time (RTT).

When the second model wishes to use the output of the first model, it sends a request to the network via the model communications system. The network responds by providing the DUT status and optionally additional data from the DUT status database, as mentioned above. So long as the DUT status indicates a passed test, the second model may continue to be trained based on the output of the first model.

To summarize, systems and methods for testing on-device neural network models or other machine learning models based on an access to normal input and output channels of a device have been described, wherein a structure of a model is designed through training such that the model produces distinctive outputs to a given set of test inputs only so long as its internal structure remains in a desired state. Models may be rendered susceptible to such testing via model pre-training with training inputs designed to train the model into an appropriate structure and/or to cause the model to produce a distinctive output if later presented with a certain set of test inputs. If the structure of the model remains within allowable limits, the device will produce a predictable output when tested. If not, the device may be enforced to return to a pre-trained model.

While the invention has been illustrated and described in detail in the drawings and foregoing description, such illustration and description are to be considered illustrative or exemplary and not restrictive. The invention is not limited to the disclosed embodiments. It can be applied to various types of UEs orterminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (loT) hubs, loT devices, including low-power medical sensors for health monitoring, medical (emergency) diagnosis and treatment devices, for hospital use or first-responder use, virtual reality (VR) headsets, etc.

Moreover, the above embodiments may be implemented in a quasi-distributed deployment where the base station is a central unit (e.g., gNB-CU) and there are two distributed units (e.g., gNB-DUs), one acting as the transmitter device and the other acting as the receiver device, while the central unit may be the entity synchronizing the distributed units.

Model functionalities may include frequency selection for license assisted access (LAA), routing, resource allocation, power control and other.

The network may be represented by any network access device (such as a base station, Node B (eNB, eNodeB, gNB, gNodeB, ng-eNB, etc.), access point or the like) that provides a geographical service area.

Furthermore, at least some of the above embodiments may be implemented to provide network equipment for 5G/6G/xG cellular networks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

The described operations like those indicated in Figs. 3 to 5 can be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for remote testing of an on-device machine learning model operated by a device (30), the apparatus comprising:
a training input generator (102) for designing training input information based on input information (60) derived from known usage of the on-device machine learning model, and based on a type or class of the on-device machine learning model, wherein the training input information is configured to provide an expected output of the device (30) in response to test input information;
a test unit (204) for applying the training input information and the test input information to the device (30) and for obtaining an output information generated by the device (30) in response to the test input information; and
a model evaluator (208) for comparing the obtained output information with the expected output to evaluate the on-device machine learning model.

2. The apparatus of claim 1, wherein the test unit (204) is configured:
to apply the training input information by transmitting it to the device (30) and to obtain the output information by receiving it by means of a transceiver; or
to apply the training input information by interfacing a hardware sensing unit on the device and to obtain the output information by analyzing an output of the hardware sensing unit on the device (30).

3. The apparatus of claim 1 or 2, wherein the apparatus is configured to deploy a policy, that is triggered by at least one predetermined condition, to determine devices that require testing.

4. The apparatus of claim 1, wherein the apparatus further comprises a test input design system (104) for designing hardware level inputs which trigger certain states of the on-device machine learning model to cause the device (30) to produce an output as the output information.

5. The apparatus of claim 1 or 2, wherein the test input information corresponds to at least a subset of the training input information and wherein the model evaluator (208) is configured to evaluate an accuracy of a response of the on-board machine learning model.

6. The apparatus of claim 1 or 2, further comprising an external input database (106) for storing the test input information, the training input information and the input information, wherein the input information is associated to a list of types of the on-device machine learning model, and wherein the test input information is associated to expected responses of network devices (30).

7. The apparatus of claim 1, wherein the apparatus is configured to render the on-device machine learning model susceptible to testing by applying a model pre-training using a mixed data vocabulary that contains network-accessible parameters mixed with true training data for an intended function of the on-device machine learning model.

8. The apparatus of claim 1, further comprising a radio frequency control algorithm (202) for controlling the on-device machine learning model by using a test transceiver as networking hardware of the test unit (204) and capable of altering at least one transmission characteristic of transmissions of the test transceiver.

9. The apparatus of claim 1 or 2, further comprising a test timing algorithm (206) for determining when the device (30) requires testing, and a status database (210) in which results of model tests and policies regarding actions to be taken for failed tests are stored.

10. The apparatus of claim 1 or 2, wherein the training input generator (102) is configured:
to design modifications to a fraction of known model inputs to cause the existence of one or more backdoor activations in the on-device machine learning model; or
to apply data tagging by adding tagged data to a training set to allow for statistical identification of specific training input information; or
to use the input information as the test input information to allow for testing by checking whether same outputs are obtained as during original training within a given range; and/or
to apply federated learning for training the on-device machine learning model.

11. The apparatus of claim 1 or 2, wherein the apparatus is configured to distribute the test input information or a command triggering local testing in a unicast or multicast or broadcast channel.

12. A first device (30) comprising an on-device machine learning model operated by the first device (30), the first device (30) being configured to determine that training of the on-device machine learning model is required in response to reaching at least one of a group of criteria consisting of a new deployment of the first device (30) or the on-device machine learning model, a new use for the on-device machine learning model, a carrier or owner policy requirement, and a predetermined time elapsed since the last training, to signal the requirement for training via a standard communications protocol to a second network device comprising an apparatus as claimed in claim 1, and to receive test and/or training information from the second device.

13. A system comprising at least one first device as claimed in claim 12 and at least one second device comprising an apparatus as claimed in claim 1.

14. The system of claim 13, wherein the on-device machine learning model is distributed to the first device (30), and wherein the test input information comprises information used for creation of the on-device machine learning model and the expected output.

15. A method of remote testing of an on-device machine learning model integrated in a device (30), the method comprising:
designing training input information based on input information (60) derived from known usage of the on-device machine learning model, and based on a type or class of the on-device machine learning model, wherein the training input information is configured to provide an expected output of the device (30) is generated in response to test input information;
applying the training input information and the test input information to the device (30);
obtaining an output information generated by the device (30) in response to the test input information; and
comparing the obtained output information with the expected output to evaluate the on-device machine learning model.
